# EUROPÄISCHE PATENTSCHRIFT

(11) **EP 3 948 171 B1**
(45) Veröffentlichungstag und Bekanntmachung des Hinweises auf die Patenterteilung: **12.06.2024**
(21) Anmeldenummer: 20723975.7
(22) Anmeldetag: 27.03.2020
(51) Int. Cl.: G01D 21/02, G01D 5/14

(54) **SENSOREINHEIT UND HYDRAULIK- ODER PNEUMATIKSYSTEM UNTER VERWENDUNG DER SENSOREINHEIT SOWIE VERWENDUNG DER SENSOREINHEIT**
SENSOR UNIT AND HYDRAULIC OR PNEUMATIC SYSTEM USING THE SENSOR UNIT AND USE OF THE SENSOR UNIT
UNITÉ DE DÉTECTION ET SYSTÈME HYDRAULIQUE OU PNEUMATIQUE UTILISANT L'UNITÉ DE DÉTECTION ET UTILISATION DE L'UNITÉ DE DÉTECTION

(30) Priorität: 27.03.2019 DE 102019107944
(43) Veröffentlichungstag der Anmeldung: 09.02.2022
(73) Patentinhaber: First Sensor Mobility GmbH, 01099 Dresden (DE)
(72) Erfinder: KÖHLER, Jens, 01561 Thiendorf (DE)
(74) Vertreter: Grünecker Patent- und Rechtsanwälte PartG mbB
(86) Internationale Anmeldenummer: PCT/DE2020/100254
(87) Internationale Veröffentlichungsnummer: WO 2020/192846

(56) Entgegenhaltungen:
- WO-A1-2019/038285
- CN-A- 108 120 471
- CN-A- 108 955 777
- DE-A1-102011 087 241
- US-A1- 2012 304 752

## Beschreibung

Die Erfindung betrifft eine Sensoreinheit, welche einen Drucksensor zur Ermittlung einer Druckänderung aufweist. Die Erfindung betrifft ebenfalls ein Hydraulik- oder Pneumatiksystem, welches eine solche Sensoreinheit umfasst sowie eine Verwendung der Sensoreinheit.

Drucksensoren werden allgemein zur Messung des Drucks von Fluiden, d. h. Flüssigkeiten und/oder Gasen, eingesetzt, insbesondere als Bestandteil von Steuerungen oder Regelungen in technischen Anwendungen, beispielsweise im Automobilbereich, in der Klimatechnik, Medizintechnik oder anderen Technikbereichen. Zur Messung des Fluiddrucks wird die eine Seite der Messmembran eines Druckmessumformers des Drucksensors, die regelmäßig als Rückseite bezeichnet, mit dem Fluid beaufschlagt, das über einen Druckkanal der Messmembran zugeleitet wird. Die andere Seite der Membran, die dem Fluid abgewandt ist und regelmäßig als Vorderseite bezeichnet ist, weist ein oder mehrere drucksensitive Elemente auf. Sie ist, je nach verwendetem Messregime (Differenzdruckmessung oder Absolutdruckmessung, Letztere: absolut oder relativ) einem Referenzdruck ausgesetzt, so dass bei einer Druckdifferenz zwischen Vorder- und Rückseite die Messmembran mechanisch ausgelenkt wird. Diese Auslenkung wird durch die drucksensitiven Elemente erfasst. Aus den Signalen der drucksensitiven Elemente kann dann mittels einer Auswerteelektronik auf den Fluiddruck rückgeschlossen werden. Dabei sind aus dem Stand der Technik unterschiedlichste Druckmessumformerprinzipien bekannt, die auf die jeweiligen Anwendungen zugeschnitten sind. Die Auswerteelektronik ist, wie auch die Elektronik zum Betreiben des Drucksensors und zum Generieren eines Ausgangssignals regelmäßig auf einem Board angeordnet. Letztere ist augenscheinlich mit dem Druckmessumformer elektrisch verbunden.

Derartige Drucksensoren können in hydraulischen und pneumatischen Systemen eingesetzt werden, d. h. in Systemen, welche der Steuerung und/oder dem Antrieb einer Vorrichtung mittels einer Flüssigkeit oder mittels Druckluft oder einem anderen unter Überdruck stehendem Gas dienen.

Die Ausgangssignale des Drucksensors werden dabei für die Überwachung und/oder Steuerung der Vorrichtung verwendet. Zur Verbesserung der Leistungsfähigkeit und aus Sicherheitsgründen ist es häufig wünschenswert, neben dem Druck eine weitere Kenngröße des Systems zu ermitteln, welche beispielsweise den momentanen Zustand des Systems beschreibt und deren Signal zumindest zur Überwachung des Systems selbst oder einer anderen Vorrichtung genutzt werden kann.

Die DE 10 2011 087241 A1 bezieht sich auf ein Sensormodul, welches ein Gehäuse, einen ersten Wegsensor und einen ersten Drucksensor umfasst. An der Außenseite des Gehäuses weist das Sensormodul einen ersten Druckstutzen auf, über den der erste Drucksensor mit einem Druck beaufschlagt werden kann. Zusätzlich kann das Sensormodul einen zweiten Wegsensor und einen zweiten Drucksensor aufweisen. Dadurch eignet sich das Sensormodul zur Überwachung zweier unabhängiger Positionen und zweier Drücke.

Die US 2012/304752 A1 bezieht sich auf ein Sensorsystem zur Messung des Drucks einer Abgasleitung eines Verbrennungsmotors. Das Sensorsystem umfasst eine Elektronikbaugruppe und eine Gehäusebaugruppe zur Aufnahme der Elektronikbaugruppe. Die Elektronikbaugruppe kann mehrere Komponenten enthalten, wie z.B. ein Elementträger mit einem Sensorelement und einem Elektronikträgerelement mit elektronischen Bauteilen. Zwischen dem Elektronikträgerelement und dem Sensorelement können elektrische Verbindungen hergestellt werden. Eine weitere Komponente umfasst ein Hauptträgerelement zur Abstützung des Sensorträgerelements und des Elektronikträgerelements.

Die WO 2019/038285 A1 betrifft ein Sensorbauteil, insbesondere für ein Getriebe eines Kraftfahrzeugs, umfassend eine Leiterplatte mit einem ersten Leiterplattenbereich und einem zweiten Leiterplattenbereich, wobei der erste Leiterplattenbereich von dem zweiten Leiterplattenbereich durch eine Fräsnut getrennt ist, von dem zweiten Leiterplattenbereich durch eine Fräsnut getrennt ist und entlang der Fräsnut gegenüber dem zweiten Leiterplattenbereich abgewinkelt ist, und wobei in oder auf dem ersten Leiterplattenbereich ein Sensor, insbesondere ein magnetoresistiver Sensor oder ein Hall-Effekt-Sensor, angeordnet ist. Die Erfindung betrifft ferner eine Vormontageanordnung und ein Verfahren zur Herstellung eines solchen Sensorbauteils.

Die CN 108 120 471 A offenbart eine Detektionsvorrichtung. Die Detektionsvorrichtung umfasst eine gedruckte Schaltplatte, ein Substrat und ein unteres Gehäuse; das Substrat befindet sich auf der ersten Seite der gedruckten Schaltplatte; Sensoren sind auf dem Substrat angeordnet; die Stifte der Sensoren gehen durch das Substrat und die gedruckte Schaltplatte und sind elektrisch mit der gedruckten Schaltplatte verbunden; das untere Gehäuse befindet sich an der zweiten Seite der gedruckten Schaltplatte und kann die gedruckte Schaltplatte aufnehmen; die gedruckte Schaltplatte ist zwischen dem Substrat und dem unteren Gehäuse befestigt; und ausgehöhlte Abschnitte, die zur Bildung von freitragenden Abschnitten auf der gedruckten Schaltplatte verwendet werden, sind in der gedruckten Schaltplatte ausgebildet; die Stifte gehen durch die freitragenden Abschnitte und sind durch Schweißen befestigt. Darüber hinaus offenbart die vorliegende Erfindung ein System zur Steuerung der Fahrzeuggeschwindigkeit. Gemäß der Erfassungsvorrichtung kann die Integration der Sensoren erleichtert werden. Die Kosten der Erfassungsvorrichtung sind gering.

Die Erfindung beschäftigt sich mit der Aufgabe, eine Sensoreinheit bereitzustellen, welche es gestattet, einen Druck oder zumindest eine Druckänderung innerhalb eines Hydraulik- oder Pneumatiksystems in Verbindung mit einer anderen physikalischen Eigenschaft des Systems anhand zumindest einer Komponente des Systems zu detektieren. Besagte Komponente des Hydraulik- oder Pneumatiksystems wird nachfolgend als externe Komponente bezeichnet, wobei sich der Begriff extern auf die Sensoreinheit bezieht. D. h. die Komponente ist nicht Teil der Sensoreinheit sondern des Hydraulik- oder Pneumatiksystems.

Die andere physikalische Eigenschaft soll insbesondere für eine solche externe Komponente detektiert werden, welche direkten Kontakt zum Fluid hat oder sich in diesem befindet. Die Detektion soll bevorzugt berührungslos erfolgen.

Die Ausgangssignale der Sensoreinheit sollen als redundante Signale zur zuverlässigen, präzisen und reproduzierbaren Zustandsbestimmung des Systems zur Verfügung stehen und die funktionale Sicherheit des Systems erhöhen.

Die Sensoreinheit soll als kompakte Baugruppe ausgebildet sein, mit effizient zugeordneten und genutzten Komponenten für eine Material und Energie sparenden Herstellung und Verwendung. Dabei soll die Sensoreinheit an verschiedene Anwendungsfälle anpassbar sein.

Es ist eine Erfassung des Zustands des Systems gewünscht, die auch einen großen Einsatzbereich hinsichtlich des Abstandes zwischen der zu detektierenden Komponente und dem dafür verwendeten Sensor gestattet.

Ein weiterer Aspekt der Erfindung ist es, ein Hydraulik- oder Pneumatiksystem anzugeben, welches eine solche Sensoreinheit verwendet, um Druckänderungen im System mit Bezug auf eine weitere physikalische Zustandsgröße zu detektieren.

Zur Lösung der Aufgabenstellung wird eine Sensoreinheit gemäß Anspruch 1 angegeben, welche einen Drucksensor wie oben zum Stand der Technik beschrieben aufweist, der zur Ermittlung einer Druckänderung in einem hydraulischen oder pneumatischen System angeordnet und ausgebildet ist, welche innerhalb des Fluids des Systems erfolgt. Gleichzeitig wird mittels eines weiteren Sensors der Sensoreinheit, einem Positionssensor, eine Lage- und Positionsänderung einer Komponente des Systems detektiert, welche unmittelbar oder mittelbar den Druck im Fluid beeinflusst.

Die Sensoreinheit umfasst zumindest ein Board, auf welchem zumindest der Drucksensor und auch dessen elektronische Bauelemente angeordnet sind. Dieses Board wird zur Unterscheidung von einem oder mehreren weiteren Boards als Mainboard bezeichnet. Wie von Drucksensoren bekannt, weist das Mainboard einen Druckdurchgang auf, welcher einseitig durch den Druckmessumformer des Drucksensors verschlossen ist, so dass ein Fluid, welches auf der dem Drucksensor gegenüber liegenden Seite des Mainboards anliegt, auf die Messmembran des Druckmessumformers des Drucksensors einwirkt.

Die Sensoreinheit weist zudem einen Positionssensor auf, welcher ausgebildet ist zur berührungslosen Erfassung von Lage- und Positionsänderungen einer externen Komponente, die nicht Teil der Sensoreinheit ist. Die Ausbildung des Positionssensors für eine derartige Bewegungsdetektion erfolgt anhand der jeweiligen Anforderungen in der praktischen Anwendung. Die Positionsmessung kann als Inkremental- oder Absolutmessung erfolgen. Zur berührungslosen Ermittlung einer Lage- und Positionsänderung sind in Abhängigkeit von deren Art und Umfang, von Art und Eigenschaft des Fluids, mit welchem die externe Komponente in Kontakt steht, und weiteren Bedingungen, unter welchen die Sensoreinheit verwendet wird, verschiedene der bekannten Positionssensoren verwendbar, wie Magnetfeldsensoren, optoelektronische Sensoren, induktive und kapazitive Sensoren.

Der Positionssensor ist am Mainboard angeordnet. Eine solche Anordnung am Mainboard umfasst dabei verschiedene Varianten, in denen das Mainboard oder der Abschnitt davon, auf welchem der Positionssensor angeordnet ist, insoweit vom Mainboard separiert ist, dass dessen Lage in zumindest einer Richtung von jener des Mainboards abweichen kann. Das schließt sowohl vollständig separierte als auch mechanisch verbundene Boards und Abschnitte eines Boards ein, Ein separates zweites Board wir zur Unterscheidung als Sekundärboard bezeichnet. Eine mechanische Verbindung des Sekundärboards mit dem Mainboard oder von Abschnitten des Mainboards miteinander kann beispielsweise durch geeignete Haltemittel an den Boards, einen gemeinsamen Träger sowie einen oder wenige gemeinsame Layer des Mainboards und des den Bewegungsdetektor aufweisenden Boards oder Boardabschnitts ein.

Derartige Anordnungen des Positionssensors am Mainboard oder auf einem Sekundärboard gestatten es, dass der Positionssensor auf variable Weise in der Sensoreinheit angeordnet sein kann und somit in der jeweiligen Anwendung auf die externe Komponente ausgerichtet werden kann, um eine genaue und reproduzierbare Erfassung einer Lage- und Positionsänderung zu erzielen, und zwar auch bei relativ großem Abstand zwischen Positionssensor und externer Komponente sowie der Anwesenheit von zwischenliegenden Bauteilen, wie beispielsweise Gehäuseteilen oder ähnlichem.

Eine Anordnung eines Sensors *am* Board schließt auch ein, dass ein Sensor in einem Durchgang des Boards positioniert ist. Bei dem Drucksensor kann auf diese Weise beispielsweise die Verbindung zwischen Druckmessumformer und Board entlastet werden, auf welcher mit dem zu messenden Druck eine sehr hohe Kraft einwirken kann.

Der Positionssensor kann auf derselben Seite des oder der Boards wie der Drucksensor angeordnet sein. Unter dem Positionssensor kann ein Durchgang durch das betreffende Board, wie beim Drucksensor vorhanden, ausgebildet sein. Erforderlich ist dieser aufgrund des berührungslosen Messprinzips des Positionssensors dann nicht, wenn das Board die Messung nicht signifikant beeinflusst. Alternativ kann der Positionssensor auf der dem Drucksensor gegenüber liegenden Seite des Boards angeordnet sein.

Neben der Elektronik zum Steuern und Betreiben der Sensoren der Sensoreinheit ist eine Signalverarbeitung erforderlich, um die Ausgangssignale des Drucksensors und des Positionssensors in den gewünschten Parameter zu übersetzen und an die nachfolgende Verwendung anzupassen, d. h. die Sensorsignale zu konditionieren. Die dafür erforderliche Auswerteelektronik ist beispielsweise mittels einer integrierten Schalung (IC) oder eines ASICs ausgebildet. Letztere sind anwenderspezifische integrierte Schaltungen, die im Unterschied zu Standard-ICs gemäß der für die betreffende Anwendung bestehenden Anforderungen entworfen und hergestellt werden. Der Umfang der Signalverarbeitung hängt von der mit der Sensoreinheit zu realisierenden Messaufgabe ab und kann zwischen einer ersten Vorverarbeitung bis zur Ausgabe eines digitalen oder analogen Steuersignals für eine externe Vorrichtung verschiedene Verarbeitungsgrade aufweisen.

Die Sensoreinheit umfasst des Weiteren elektrische Anschlüsse. Letztere dienen der elektrischen Verbindung der Sensoreinheit mit externen Vorrichtungen und/oder Messgeräten zum Betreiben der Sensoreinheit und Weiterleitung der Ausgangssignale der Sensoreinheit. Als Anschlüsse können verschiedene Ausführungen verwendet werden, wie beispielsweise Kontaktstifte oder nachgiebige Kontakte oder andere.

Alternativ kann jedem Sensor und/oder jedem Sensortyp eine eigene oder eine gemeinsame Auswerteelektronik zugeordnet sein, wobei die Konditionierung der Ausgangssignale der beiden Sensortypen bevorzugt unabhängig voneinander erfolgt.

In analoger Weise können die elektrischen Anschlüsse für jeden Sensortyp separat ausgebildet sein, oder beide Sensortypen verwenden die elektrischen Anschlüsse der Sensoreinheit gemeinsam.

In Abhängigkeit von der Anwendung der Sensoreinheit in einem System, dessen Ausführung eines Gehäuses und den auf die Sensoreinheit einwirkenden Umgebungsbedingungen kann die Sensoreinheit ein eigenes, vollständig oder teilweise umschließendes Gehäuse und/oder einen Träger für die Komponenten der Sensoreinheit aufweisen. Für den Schutz der Sensoreinheit oder zumindest der zu schützende Komponenten der Sensoreinheit, wie Druckmessumformer mit drucksensitiven Elementen und/oder Positionssensor mit bewegungssensitiven Elementen, elektronische Bauelemente, Kontakte und Leiterbahnen zum Aufnehmen, Vorverarbeitung und/oder Verarbeiten und Weiterleiten der Messsignale sowie das Board, auf dem diese Elemente angeordnet sind, stehen dem Fachmann verschiedene Varianten zur Verfügung. Bekannt sind beispielsweise eine das Board, mit oder ohne Träger ausgebildet, bedeckende Gehäusekappe oder ein umschließendes Gehäuse oder ein teilweiser oder vollständiger Gelschutz. Verschiedene Positionssensoren, insbesondere magnetoresistive Sensoren, können sehr robust sein, so dass diese in den Gehäuseschutz einbezogen werden können, aber nicht müssen.

Sofern die Ausrichtung des Positionssensors nicht bereits durch die Lage des Boards, auf welchem der Positionssensor montiert ist, realisierbar ist, ist entsprechend einer Ausgestaltung der Sensoreinheit der Positionssenor oder zumindest Bereiche von diesem auf die zu detektierende externe Komponente ausrichtbar. Die Ausrichtung des Positionssensors zur Messung einer Lage- und Positionsänderung der externen Komponente kann auf verschiedene Weise erfolgen, Entsprechend einer Ausgestaltung kann der gesamte Positionssensor in Richtung der externen Komponente neigbar sein. Die Neigung erfolgt dabei entsprechend der jeweiligen baulichen Situation soweit, dass das Board, auf welchem der Positionssensor angeordnet ist, die Messung nicht signifikant beeinflusst. Das gleiche Ergebnis kann erzielt werden, wenn der Positionssensor in Bereiche unterteilt ist, welche einen Winkel zueinander aufweisen oder deren Winkel einstellbar ist. In diesem Fall kann nur jener Bereich zur externen Komponente geneigt sein, welcher den Messkopf umfasst.

Die erforderliche Ausrichtung des Positionssensors auf die externe Komponente kann bei einem Neigungswinkel im Bereich zwischen 0° bis -180° erzielt werden. Der Neigungswinkel wird dabei zwischen einem ebenen Oberflächenbereich des Mainboards, beispielsweise jenem Bereich auf welchem der Drucksensor angeordnet ist, und jenem ebenen Oberflächenbereich des Abschnitts des Mainboards oder des Sekundärboards gemessen, auf welchem der Positionssensor angeordnet ist. D. h., dass bei einem Winkel von 0° beide Oberflächenbereiche parallel zueinander liegen und bei einem Winkel mit negativen Werten sich der betreffende Abschnitt des Mainboards oder das Sekundärboard unterhalb der Mainboardoberfläche befindet. Der Begriff unterhalb bezieht sich dabei auf die Schwerkraft.

Die Ausrichtbarkeit des Positionssensors und damit auch die Neigung der beiden Oberflächenbereiche relativ zueinander gestatten in Abhängigkeit von Ausgestaltung einer Verbindung beider Bereiche verschiedene Lagen im Raum. Auf diese Weise können beide Sensortypen variabel zu dem jeweiligen Messobjekt, dem Fluid und der externen Komponente, ausgerichtet werden. Damit ist ein gutes Ansprechverhalten beider Sensoren zu erzielen und die Sensoreinheit in verschiedenen Systemen anwendbar.

Zur Realisierung der Ausrichtung können das Mainboard und/oder das Sekundärboard starr oder zumindest abschnittsweise flexibel ausgebildet sein. Letztere sind biegbar, vergleichbar einer flexiblen Folie, und werden als flexible PCB oder Flexboard bezeichnet. Sind einzelne Abschnitte eines Flexboards starr, wird ein solches Board als Starrflexboard bezeichnet. Bei der Verwendung von mehr als einem Board für beide Sensortypen können die jeweils einen Sensortyp haltenden Boards frei zueinander positioniert und mit geeigneten Haltemitteln fixiert werden. Bei der Verwendung eines Flex- oder Starrflexboards können die beiden zueinander beabstandeten Sensoren mittels eines dazwischen liegenden flexiblen Boardbereichs zueinander wie oben beschrieben geneigt und je nach Bestückung und Breite des flexiblen Bereichs auch verdreht werden.

Bei Verwendung eines starren Mainboards kann zumindest eine Neigung eines Abschnitts des Mainboards eingestellt werden, indem das Board eine ein- oder beidseitig oberflächliche Einschnürung, Kerbe o. ä. aufweist, die einen Abschnitt des Boards markiert und soweit in das Board eingebracht ist, dass die Verjüngung im Board als Drehachse zur Einstellung einer Neigung des Abschnitts fungieren kann, ohne diesen vom Board zu trennen. Mittels der Ausrichtung der Einschnürung ist die Neigung des Abschnitts im Raum einstellbar.

Augenscheinlich sind die elektrischen Verbindungen zwischen dem Sensor auf dem Abschnitt oder dem Sekundärboard und dem Mainboard hinsichtlich ihrer Lage und Flexibilität an die Verbindung zwischen den unterschiedlich ausgerichteten, z. B. zueinander geneigten, Boards oder Boardabschnitten anzupassen.

Entsprechend einer Ausführungsform kann der Positionssensor ein Magnetfeldsensor sein, wenn die externe Komponente magnetische oder magnetisierbare Bestandteile aufweist. Diese Bestandteile fungieren als Positionsgeber für den Magnetfeldsensor. Dieser misst die jeweilige physikalische Eigenschaft, vorliegend eine Lage- und Positionsänderung der externen Komponente häufig nicht direkt, sondern anhand von Änderungen oder Störungen im magnetischen Fluss der Komponente, nachfolgend zusammenfassend als Magnetfeldänderungen bezeichnet. Die Magnetfeldänderungen enthalten Informationen über Lage- und Positionsänderungen, wie translatorische und Drehbewegungen. Die Magnetfeldänderungen erzeugen im Magnetfeldsensor ein auswertbares elektrisches Ausgangssignal, aus welchem auf Art und Umfang der Bewegung der Komponente geschlossen und welches direkt oder indirekt zur Erzeugung eines Steuersignals für eine Reaktion auf die detektierte Lage- und Positionsänderung verwendet werden kann.

Magnetfeldsensoren sind beispielsweise magnetoresistive Sensoren (MR-Sensoren), Die MR-Sensoren nutzen verschiedene resistive Effekte aus und eine Magnetfeldänderung in eine elektrische Größe, eine Widerstandsänderung in einem elektrisch leitenden oder halbleitenden Material, umsetzen. Als magnetoresistiver Sensor sind je nach der zu erwartenden Lage- oder Positionsänderung verschiedene Sensortypen geeignet. Mit linearen magnetoresistiven Sensoren sind lineare Bewegungen detektierbar. 3D-magnetoresistive Sensoren gestatten es, auch darüber hinaus gehende Bewegungen im Raum, einschließlich Winkeländerungen, zu detektieren. Letztere können beispielsweise als AMR-Sensoren (AMR: anisotrop magnetoresistance), GMR-Sensoren (GMR: giant magnetoresistance), CMR-Sensoren (CMR: colossal magnetoresistance), TMR-Sensoren (TMR: tunnel magnetoresistance) oder ausgebildet sein. Magnetoresistive Sensoren gestatten eine berührungslose, präzise und zuverlässige Positionsmessung.

Zur Ermittlung der Lage- oder Positionsänderung können ein Magnetfeldsensor oder mehrere davon verwendet werden. Die Mehrzahl von Magnetfeldsensoren können entsprechend der zu erwartenden Lage- oder Positionsänderung angeordnet sein oder in einem linearen oder zweidimensionalen Array.

Ein Hydraulik- oder Pneumatiksystem, welches die zuvor beschriebene Sensoreinheit umfasst, weist in einem Gehäuse einen Fluidraum auf sowie eine bewegliche Komponente, welche mit dem Fluidraum derart in Wirkzusammenhang besteht, dass aufgrund oder infolge einer Bewegung der beweglichen Komponente eine Druckänderung im Fluidraum erfolgt. Eine solche Konstellation von Fluidraum und einer auf den Fluidraum einwirkenden beweglichen Komponente ist in vielen Anwendungen anzutreffen. Die bewegliche Komponente des Hydraulik- oder Pneumatiksystems kann beispielsweise ein Kolben sein. Dieser bewegt sich linear in einem Zylinder des Hydraulik- oder Pneumatiksystems. Andere bewegliche Komponenten können andere Bewegungen ausführen, auch eine Dreh- oder Schwenkbewegung oder Kombinationen davon.

Die Druckänderung im Fluidraum wird vom Drucksensor der Sensoreinheit ermittelt und ein erstes Ausgangssignal des Drucksensors (Druckausgangssignal) generiert, welches von den elektrischen Anschlüssen der Sensoreinheit abgreifbar ist.

Die mit der Druckänderung im Fluidraum verknüpfte Bewegung der beweglichen Komponente wird vom Positionssensor der Sensoreinheit detektiert und ein zweites Ausgangssignal des Positionssensors (Bewegungsausgangssignal) generiert, welches ebenfalls von weiteren oder denselben elektrischen Anschlüssen der Sensoreinheit abgreifbar ist.

Aufgrund der unmittelbaren Verknüpfung von Bewegung und Druckänderung können redundante Ausgangssignale erzeugt werden. Diese sind in vielen Anwendungen aus Sicherheitsgründen und/oder zur Erhöhung der Funktionalität erwünscht.

Das zumindest eine Board der Sensoreinheit und die Positionierung des Drucksensors und des Positionssensors auf dem Board sind derart an das Hydraulik- oder Pneumatiksystem adaptiert, dass der Druckkanal des Drucksensors im Fluidraum mündet und der Positionssensor derart über der beweglichen Komponente positioniert und auf diese ausgerichtet ist, dass beide Messungen mit der gewünschten Präzision ausführbar sind.

Entsprechend einer Ausgestaltung des Hydraulik- oder Pneumatiksystems weist die bewegliche Komponente zumindest einen magnetischen Positionsgeber auf. Dieser ist derart ausgebildet und angeordnet, dass er die zu detektierende Bewegung der beweglichen Komponente abbildet. Bei dessen Anwendungsdesign sind daher die Ausführung des magnetoresistiven Sensors sowie die Lage und Gestalt der beweglichen Komponente sowie deren Bewegung zu berücksichtigen.

In Abhängigkeit von der zu detektierenden Bewegung und der benötigten Messung kommen verschiedene Ausgestaltungen des oder der Positionsgeber in Betracht. So können verschiedene lineare Maßstäbe mit unterschiedlichen Teilungen für inkrementale und absolute Weg- oder Winkelmessungen verwendet werden. Dabei wird der Positionssensor für eine Positionsmessung entlang des Weges des Positionsgebers bzw. radial oder axial benachbart zu diesem angeordnet und auf die jeweilige Bewegungsbahn des Positionsgebers ausgerichtet. Um über den gesamten möglichen Bewegungsablauf der beweglichen Komponente eine Lage- und Positionsänderung mittels des Positionssensors detektieren zu können, ist der Positionsgeber in einer Ausgestaltung des Hydraulik- oder Pneumatiksystems derart ausgebildet, dass er entlang seines gesamten möglichen Weges dem Messkanal des Positionssensors gegenüber liegt. Dabei kann der Positionsgeber ein- oder mehrteilig ausgebildet sein.

Bei einer Ausführung der Sensoreinheit, in welcher ein Magnetfeldsensor als Positionssensor verwendet wird, besteht der Positionsgeber aus einem magnetischen oder magnetisierten Material. Er ist hinsichtlich seiner magnetischen Eigenschaften und seiner Lage im Hydraulik- oder Pneumatiksystem derart auf den Magnetfeldsensor abgestimmt, dass sein magnetischer Fluss ausreichend ist, um das gewünschte Messsignal im Magnetfeldsensor der Sensoreinheit, beispielsweise einem magnetoresistiven Sensor, über die gewünschte Weglänge der beweglichen Komponente zu erzeugend. Augenscheinlich hängt die Flussdichte des Magnetfeldes von der Entfernung und der Form des magnetischen Positionsgebers ab, so dass die Flussdichte des magnetischen Positionsgebers und/oder die Leistungsparameter des Magnetfeldsensors auf die Gegebenheiten des jeweiligen Hydraulik- oder Pneumatiksystems abzustimmen ist.

In dieser Ausgestaltung des Hydraulik- oder Pneumatiksystems weist der Positionsgeber geeignete lineare magnetische Maßstäbe und/oder magnetische Polringe oder Polräder auf. Deren Polteilungen oder Nonien für die Weg- oder Winkelmessung mit dem Positionssensor sind mit einer geeigneten Unterteilung für die gewünschte Differenzierung der aktuellen Position ausgebildet.

Ein Beispiel für ein Hydrauliksystem, bei welchem ein redundantes Ausgangssignal von Vorteil ist, ist ein hydraulischer Bremshebel. Die Betätigung des Hebels bewirkt eine Bewegung einer mit dem Hebel in Wirkzusammenhang stehenden Komponente und damit verbunden eine Druckänderung im Fluid des Bremshebels, Beide Änderungen des Systems werden mittels der beiden Sensoren der oben beschriebenen Sensoreinheit detektiert und es werden die beschriebenen redundanten Ausgangssignale erzeugt. Diese sind über die Anschlüsse der Sensoreinheit abgreifbar und werden dazu verwendet, um eine Bremse elektrisch zu bedienen. Bremshebel und Bremse sind nicht notwendigerweise miteinander mechanisch oder hydraulisch verbunden.

Die Erfindung soll nachfolgend beispielhaft jedoch nicht beschränkend an verschiedenen Ausführungen eines hydraulischen Bremshebels erläutert werden. Der Fachmann würde die zuvor in den verschiedenen Ausgestaltungen der Erfindung und nachfolgend in den Ausführungsbeispiel realisierten Merkmale in weiteren Anwendungen ausführen und kombinieren soweit es ihm zweckdienlich und sinnvoll erscheint.

Die Zeichnungen zeigen in
- Fig. 1: eine Ausgestaltung einer Sensoreinheit in einer perspektivischen Draufsicht;
- Fig. 2: die Sensoreinheit gemäß Fig. 1 in einer perspektivischen Sicht auf die Unterseite der Sensoreinheit;
- Fig. 3: eine alternativ Ausgestaltung einer Sensoreinheit in einer perspektivischen Draufsicht;
- Fig. 4: eine perspektivische Draufsicht auf die Sensoreinheit nach Fig. 3, die in einer Hydraulikeinheit montiert ist, und
- Fig. 5: eine perspektivischen Schnittdarstellung der Hydraulikeinheit gemäß Fig. 4 .

Anhand der zugehörigen Zeichnungen sollen die zuvor beschriebenen Merkmale klarstellend, aber nicht beschränkend am Beispiel erläutert werden. Die Zeichnungen zeigen die Vorrichtung nur schematisch in dem Umfang, wie es zur Erläuterung der Erfindung erforderlich ist. Sie erheben keinen Anspruch auf Vollständigkeit oder Maßstäblichkeit.

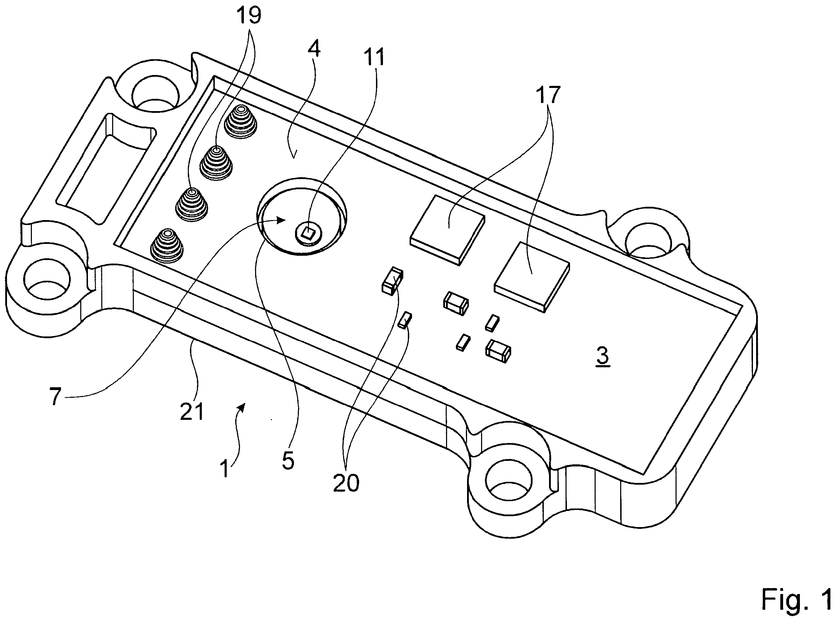

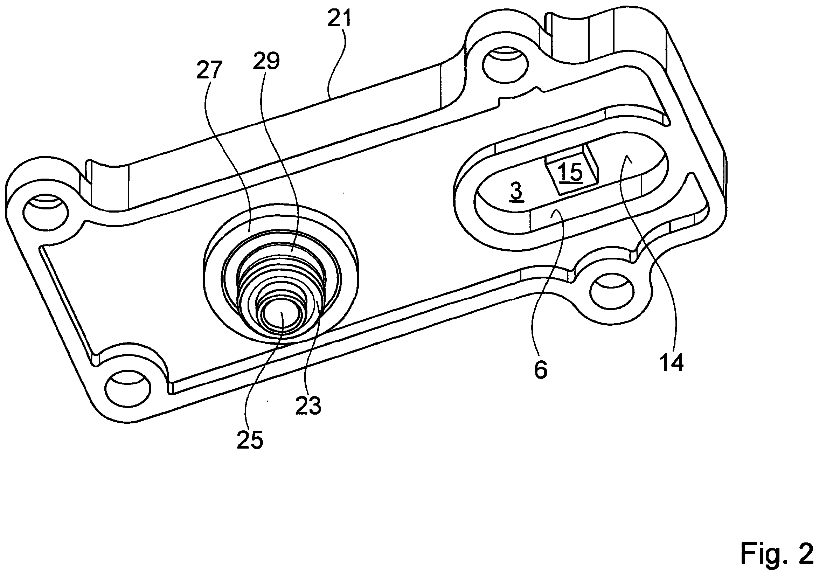

Die Sensoreinheit 1 in Fig. 1 weist ein Board mit einer sichtbaren Oberseite 4 und einer der Oberseite 4 gegenüber liegenden Unterseite 14 auf. Das in dieser Ausführung einzige Board das gleichzeitig das Mainboard 3 ist, weist ein seiner ersten, linken Hälfte einen Durchgang 5 durch das Mainboard 3 auf. Im Durchgang 5 ist der Drucksensor 7 angeordnet, so dass dessen Druckstutzen (nicht dargestellt) durch den Durchgang 5 ragt. Der Druckkanal 25 (Fig. 2) des Druckstutzens 23 (Fig. 2) ist durch die Messmembran 9 mit einem drucksensitiven Element 11 oberseitig verschlossen.

Auf der Unterseite 14 des Mainboards 3 (Fig. 2) ist in einer Ausnehmung 6 des Trägers 21, in der zweiten, rechten Hälfte des Mainboards 3, ein Positionssensor 15, angeordnet, im Ausführungsform ist das beispielhaft, jedoch nicht beschränkend ein magnetoresistiver Sensor.

Auf der Oberseite 4 des Mainboards 3 sind zwei ASICs 17, eines für jeden Sensor, sowie weitere elektronische Bauelemente 20 angeordnet. Der Drucksensor 7 und der Positionssensor 15 sind über Leiterbahnen (nicht dargestellt) des Mainboards 3 mit den ASICs 17 und jedes ASIC 17 mit zwei der vier elektrischen Anschlüsse 19 elektrisch verbunden. Die Anschlüsse 19 sind beispielhaft und nicht beschränkend als Federkontakte ausgebildet.

Das Mainboard 3 wird von einem Träger 21 gehalten und umrahmt. Mittels des Trägers 21 ist die Sensoreinheit 1 zur Anwendung montierbar.

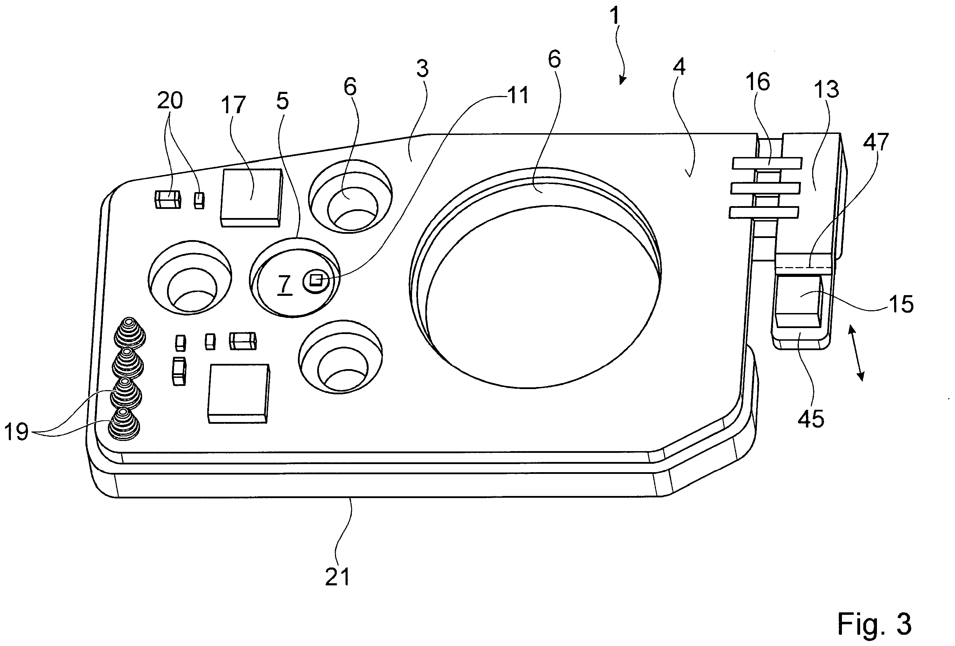

In Fig. 2 ist die Unterseite der Sensoreinheit 1 dargestellt. Die Unterseite 14 des Mainboards 3 ist durch den Träger 21 nahezu vollständig bedeckt. Lediglich die Bereiche, in welchen der Drucksensor 7 und der Positionssensor 15 angeordnet sind, weist der Träger 21 die zuvor beschriebenen Ausnehmungen 6 auf. Der Druckstutzen 23 weist eine ringförmige Verstärkung 29 auf, mit welcher der Drucksensor 7 unterseitig am Träger 21 montiert ist, so dass der Drucksensor 7 durch die linke Ausnehmung 6 des Trägers 21 und den darüber liegenden Durchgang 5 des Mainboards 3 ragt (Fig. 3).

Der Druckstutzen 23 ist im Bereich seiner ringförmigen Verstärkung 29 von einer ringförmigen Verdickung des Trägers 21 konzentrisch umgeben, so dass Letztere als Positionierungsmittel 27 für den -Drucksensor 7 im Durchgang 5 des Mainboards 3 fungieren kann. Dazu korreliert der innere Durchmesser des Positionierungsmittels 27 mit dem äußeren Durchmesser der Verstärkung 29 des Druckstutzens 23.

Fig. 3 zeigt eine weitere Ausgestaltung einer Sensoreinheit Sie unterscheidet sich von jener nach Fig. 1 und Fig. 2 durch die Anordnung des Positionssensors 15 und eine zweiteile Gestaltung des Boards mit dem Mainboard 3 und einem Sekundärboard 13. Weiter sind der Träger 21 und die Montage der Boards 3, 13 auf den Träger 21 modifiziert.

Der Positionssensor 15 ist einem Ausleger 45 des zweiteiligen Boards angeordnet. Dabei ist das Mainboard 3 jenes, welches den Drucksensor 7 mit dem drucksensitiven Element 11 im Durchgang 5 des Mainboards 3 sowie die Anschlüsse 19 der Sensoreinheit und die elektronischen Bauelemente 20 und ASICs 17 beider Sensoren 7, 15 trägt. Der Ausleger 45 ist als Teil eines Sekundärboards 13 ausgebildet, welches mit einem Abschnitt auf dem Träger 21 montiert und mit einem zweiten Abschnitt, welcher den Positionssensor 15 trägt über den Träger hinausragt. Der Positionssensor 15 ist mittels geeigneter Verbinder 16, die zwischen Sekundärboard 13 und Board 3 ausgebildet sind, elektrisch mit den ihm zugeordneten elektronischen Bauelementen 20 und seinem ASIC 17 auf dem Mainboard 3 verbunden.

Mainboard 3 und Sekundärboard 13 sind durch geeignete Haltemittel (nicht dargestellt) und/oder über den gemeinsamen Träger 21 miteinander mechanisch verbunden
In jenem Bereich des Sekundärboards 13, welcher als Ausleger 45 ausgebildet ist, weist das Sekundärboard 13 eine oberflächliche Kerbung auf, so dass das Sekundärboard 13 dort eine Einschnürung 47, bezogen auf die Boarddicke, aufweist. Die Einschnürung 47 gestattet es, dass das den Positionssensor 15 tragende Teil des Sekundärboards 13 nach oben oder unten geneigt werden (dargestellt durch einen Doppelpfeil) und die Oberfläche des Auslegers 45 einen positiven oder negativen von 0° abweichenden Winkel, gemessen zur Oberseite 4 des Mainboards 3, einnehmen kann. Auf diese Weise kann der Positionssensor 15 auf eine bewegliche externe Komponente (nicht dargestellt) ausgerichtet werden, beispielsweise derart, dass das Board sich nicht zwischen dem Positionssensor 13 und der externen Komponente befindet, sofern diese unter dem Positionssensor 15 angeordnet ist.

Im dargestellten Ausführungsbeispiel liegen die Boards 3, 13 auf dem Träger 21 auf. Zudem weist der Träger 21 neben der Ausnehmung für den Drucksensor (nicht dargestellt) verschiedene konstruktive Ausnehmungen auf, welche der Montage der Sensoreinheit 1 und deren Betrieb dienen können.

Der Positionssensor 15 ist in diesem Ausführungsbeispiel ein magnetoresistiver Sensor.

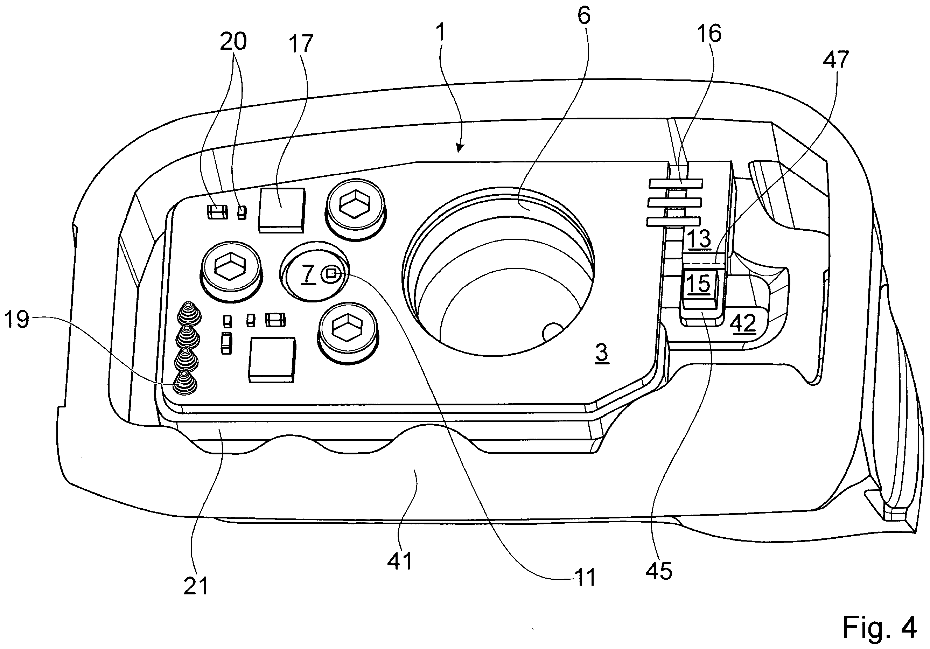

Fig. 4 stellt die Verwendung einer Ausgestaltung der Sensoreinheit 1 gemäß Fig. 3 in einem Hydrauliksystem dar. In Draufsicht ist das zweiteilige Board, bestehend aus Mainboard 3 und Sekundärboard 13, mit dem darauf angeordneten ASICs 17 der Sensoren 7, 15 und den zugehörigen elektronischen Bauelementen 20 sowie Anschlüssen 19. Insoweit wird auf die Darlegungen zu Fig. 3 verwiesen.

Die Sensoreinheit 1 ist in einem Gehäuse 41 eines Hydrauliksystems angeordnet. Das Gehäuse 41 umschließt die Sensoreinheit vollständig. Der oberseitige Verschluss des Gehäuses 41 wurde zur besseren Erkennbarkeit jedoch nicht dargestellt. Im Bereich unterhalb des Positionssensors 15 ist im Gehäuse 41 ein Hohlraum 42 angeordnet, um die Ausrichtung und die Funktionalität des Positionssensors 15 zu verbessern.

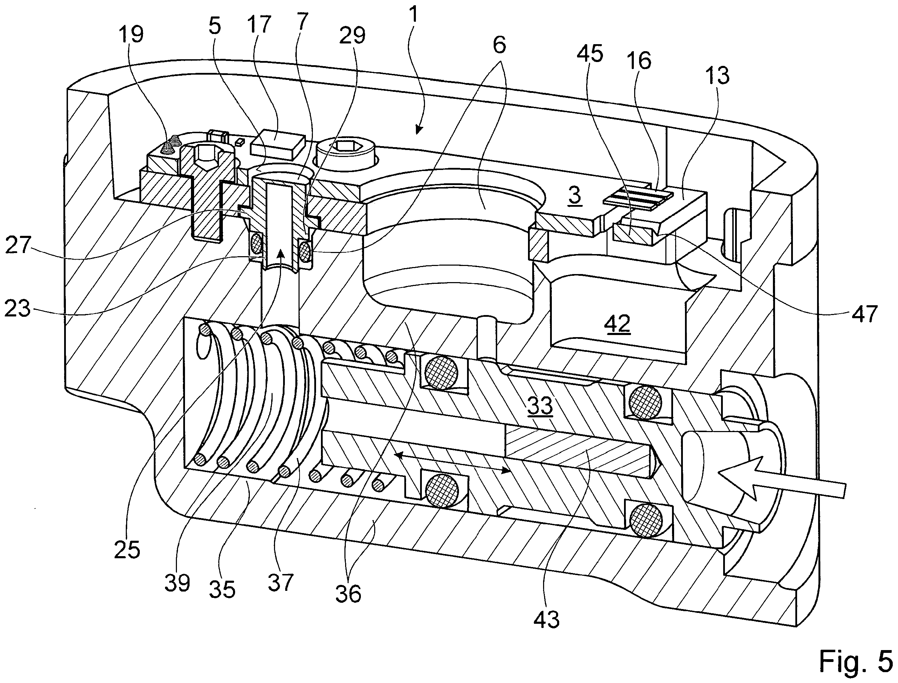

Fig. 5 zeigt die Ausführungsform eines Hydrauliksystems gemäß Fig. 4 in einer Schnittdarstellung. Zur besseren Erkennbarkeit ist auch diese Darstellung perspektivisch gewählt.

Das Hydrauliksystem 31 umfasst einen Kolben 33, welcher in einem Zylinder 35 mittels eines geeigneten Übertragungsmittels (dargestellt durch einen Pfeil) und einer Rückstellfeder 37 linear in beide Richtungen bewegbar ist (dargestellt durch einen Doppelpfeil). Die Rückstellfeder 37 ist im Fluidraum 39 angeordnet. Dieser ist mit einer Hydraulikflüssigkeit (nicht dargestellt) gefüllt und durch den Kolben 33 dicht verschlossen.

Die Sensoreinheit 1 ist derart über dem Zylinder 35 und dem Fluidraum 39 angeordnet, dass der Drucksensor 7 durch eine Öffnung in der Zylinderwandung 36 im Fluidraum 39 mündet und dass der Positionssensor (in der gewählten Schnittführung nicht erkennbar), der wie zu Fig. 3 und Fig. 4 beschrieben auf dem Sekundärboard 13 angeordnet ist, über dem Kolben 33 liegt, getrennt von diesem durch die Zylinderwandung 36.

Der Kolben 33 ist im Ausführungsbeispiel jene sich bewegende Komponente, welche infolge ihrer Bewegung eine Druckänderung im Fluidraum 39 bewirkt und deren Bewegung redundant zur Druckänderung detektiert werden soll. Er stellt somit die hier mit Bezug auf die Sensoreinheit 1 benannte externe Komponente dar. Der Kolben 33 weist an seiner dem Positionssensor 15 gegenüber liegenden Seite einen Magneten als Positionsgeber 43 auf, der so ausgebildet ist, dass dem magnetoresistiver Sensor 15 über die gesamte Bewegungsstrecke des Kolbens 33 gegenüber liegt.

Der Positionsgeber 43, der hier als Stabmagnet ausgebildet ist, weist eine axiale Ausrichtung zum Kolben 33 und konzentrische Lage im Kolben 33 auf, so dass insbesondere in Verbindung mit dem geneigten Sekundärboard 13 eine präzise Lage- und Positionsänderung des Kolbens 33 detektierbar ist. In dieser Ausführungsform weist der Positionsgeber 43 eine solche Geometrie auf, in der dargestellten Ausführungsform eine solche Länge, dass er dem Positionssensor 15 über die gesamte Bewegungsstrecke des Kolbens 33 gegenüber liegt.

Andere Ausgestaltungen des Positionsgebers sind möglich. Beispielsweise können lineare magnetisierte Maßstäbe auf der Oberfläche des Kolbens 33 oder weitere Positionsgeber angeordnet sein.

Unter Einwirkung der Übertragungsmittel 41 bewegt sich der Kolben 33 im Zylinder 35 und verursacht infolge dessen eine Druckänderung im Fluidraum 39. Diese wird durch den Drucksensor 7 detektiert und daraus in jenem dem Drucksensor 7 zugeordneten ASIC 17 ein Ausgangssignal generiert.

Die Bewegung des Kolbens 33 erzeugt gleichzeitig ein Messsignal im Positionssensor 15, aus welchem ebenfalls ein Ausgangssignal generiert wird. Beide Signale können über geeignet Anschlüsse 19 abgegriffen werden. Die Redundanz der Ausgangssignale bewirkt, dass bei einer Fehlfunktion eines der Sensoren oder dessen ASIC ein Ausgangssignal zu Verfügung steht, um eine externe Vorrichtung zu steuern, beispielsweise eine elektrische Bremse eines Fahrzeugs zu aktivieren.

## Patentansprüche

1. Sensoreinheit (1) mit einem Drucksensor (7), welcher ausgebildet ist zur Ermittlung einer Druckänderung eines Fluids,
wobei der Drucksensor (7) einen Druckmessumformer aufweist, der über einen Druckkanal (25) des Drucksensors (7) mit dem Fluid verbindbar ist,
sowie elektronische Bauelemente (17) zum Betreiben des Drucksensors (7) und zum Generieren eines ersten Ausgangssignals, welche zu diesem Zweck mit dem Druckmessumformer elektrisch verbunden sind, weiter umfassend.
- zumindest ein Board, nachfolgend als Mainboard (3) bezeichnet, auf welchem zumindest der Drucksensor (7) und die elektronischen Bauelemente (17), sowie weitere elektronische Bauelemente (20) angeordnet sind,
wobei das Mainboard (3) einen Durchgang (5) aufweist, welcher einseitig durch den Drucksensor (7) verschlossen ist,
- einen Sensor, nachfolgend als Positionssensor (15) bezeichnet, welcher ausgebildet ist zur berührungslosen Erfassung einer Lage- und Positionsänderung einer externen, nicht der Sensoreinheit (1) zugehörigen, Komponente relativ zur Sensoreinheit (1),
- wobei der Positionssensor (15) oder zumindest ein Bereich von diesem am Mainboard (3) oder auf einem weiteren Board, letzteres ist nachfolgend als Sekundärboard (13) bezeichnet, angeordnet ist,
- wobei der Positionssensor (15) elektrisch mit ihm zugeordneten elektronischen Bauelementen (17) und ihm zugeordneten der weiteren elektronischen Bauelemente (20) verbunden ist, welche zum Betreiben des Positionssensors (15) und zum Generieren eines Ausgangssignals des Positionssensors (15), nachfolgend als zweites Ausgangssignal bezeichnet, ausgebildet sind, und
- elektrische Anschlüsse (19) zum Abgreifen des ersten und des zweiten Ausgangssignals.

2. Sensoreinheit (1) nach Anspruch 1,
wobei der Positionssensor (15) oder zumindest ein Bereich von diesem zur besagten Erfassung einer Lage- und Positionsänderung auf die externe Komponente ausrichtbar ist.

3. Sensoreinheit (1) nach Anspruch 1,
wobei der Positionssensor (15) oder zumindest ein Bereich von diesem relativ zum Mainboard (3) neigbar ist.

4. Sensoreinheit (1) nach einem der vorstehenden Ansprüche,
wobei das Mainboard (3) als Flexboard, als Starrflexboard oder mit einer oberflächlichen Einschnürung (47) ausgebildet ist, welche besagten Abschnitt vom übrigen Mainboard (3) insoweit absondert, dass der Abschnitt mit dem Mainboard (3) verbunden und relativ zum Mainboard (3) neigbar ist.

5. Sensoreinheit (1) nach einem der vorstehenden Ansprüche,
wobei der Positionssensor (15) ein Magnetfeldsensor ist, welcher derart ausgebildet und angeordnet ist, dass er Änderungen eines Magnetfelds der externen Komponente infolge einer Bewegung der externen Komponente detektiert.

6. Hydraulik- oder Pneumatiksystem mit einem in einem Gehäuse angeordneten Fluidraum (39) und mit einer beweglichen Komponente,
welche mit dem Fluidraum (39) derart in Wirkzusammenhang besteht, dass aufgrund oder infolge einer Bewegung der beweglichen Komponente eine Druckänderung im Fluidraum (39) bewirkbar ist,
wobei das Hydraulik- oder Pneumatiksystem eine Sensoreinheit (1) nach einem der vorstehenden Ansprüche aufweist zur Ermittlung der Druckänderung im Fluidraum (39) und der Lage- und Positionsänderung der beweglichen Komponente und
wobei die bewegliche Komponente einen Positionsgeber (43) aufweist, welcher mit dem Positionssensor (15) in Wirkzusammenhang steht.

7. Hydraulik- oder Pneumatiksystem nach Anspruch 6,
wobei der Positionsgeber (43) aus einem magnetischen oder magnetisierten Material besteht und der Positionssensor (15) ein Magnetfeldsensor ist.

8. Verwendung der Sensoreinheit nach Anspruch 1 bis 5 in einem hydraulischen Bremshebel,
wobei infolge der Betätigung des Bremshebels mittels der Sensoreinheit ein Ausgangssignal des Drucksensors, als erstes Ausgangssignal bezeichnet, aufgrund der Druckänderung im Fluid generiert wird und redundant dazu ein zweites Ausgangssignal durch den Positionssensor aufgrund der damit verbundenen Bewegung einer Komponente des Bremshebels generiert wird und
wobei zumindest das erste Ausgangssignal zur elektrischen Bedienung einer Bremse verwendet wird.

## Claims

1. Sensor unit (1) with a pressure sensor (7), which is designed to determine a change in pressure of a fluid,
wherein the pressure sensor (7) has a pressure transducer which can be connected to the fluid via a pressure channel (25) of the pressure sensor (7),
and electronic components (17) for operating the pressure sensor (7) and for generating a first output signal, which are electrically connected to the pressure transducer for this purpose, further comprising
- at least one board, hereinafter referred to as mainboard (3), on which at least the pressure sensor (7) and the electronic components (17), as well as further electronic components (20) are arranged,
wherein the mainboard (3) has a passage (5) which is closed on one side by the pressure sensor (7),
- a sensor, hereinafter referred to as position sensor (15), which is formed for the contactless detection of a change in position and orientation of an external component, not associated with the sensor unit (1), relative to the sensor unit (1),
- wherein the position sensor (15) or at least a region thereof is arranged on the main board (3) or on a further board, the latter being referred to below as the secondary board (13),
- wherein the position sensor (15) is electrically connected to electronic components (17) assigned to it and to the further electronic components (20) assigned to it, which are designed to operate the position sensor (15) and to generate an output signal of the position sensor (15), hereinafter referred to as the second output signal, and
- electrical connections (19) for tapping the first and second output signals.

2. Sensor unit (1) according to claim 1,
wherein the position sensor (15) or at least a region thereof can be aligned with the external component for said detection of a change in position and attitude.

3. Sensor unit (1) according to claim 1,
wherein the position sensor (15) or at least a region thereof can be tilted relative to the mainboard (3).

4. Sensor unit (1) according to one of the preceding claims,
wherein the mainboard (3) is formed as a flexboard, as a rigid-flexboard or with a superficial constriction (47) which separates said section from the rest of the mainboard (3) in such a way that the section is connected to the mainboard (3) and can be tilted relative to the mainboard (3).

5. Sensor unit (1) according to one of the preceding claims,
wherein the position sensor (15) is a magnetic field sensor which is designed and arranged in such a way that it detects changes in a magnetic field of the external component as a result of a movement of the external component.

6. Hydraulic or pneumatic system with a fluid space (39) arranged in a housing and with a movable component,
which is in interdependency with the fluid space (39) in such a way that a pressure change in the fluid space (39) can be brought about due to or as a result of a movement of the movable component,
wherein the hydraulic or pneumatic system comprises a sensor unit (1) according to one of the preceding claims for determining the pressure change in the fluid space (39) and the change in position and orientation of the movable component, and
wherein the movable component has a position transducer (43) which is in interdependency with the position sensor (15).

7. Hydraulic or pneumatic system according to claim 6,
wherein the position transducer (43) consists of a magnetic or magnetized material and the position sensor (15) is a magnetic field sensor.

8. Use of the sensor unit according to claims 1 to 5 in a hydraulic brake lever,
wherein, as a result of the actuation of the brake lever by means of the sensor unit, an output signal of the pressure sensor, referred to as the first output signal, is generated due to the pressure change in the fluid and, redundantly thereto, a second output signal is generated by the position sensor due to the associated movement of a component of the brake lever, and
whereby at least the first output signal is used for the electrical operation of a brake.

## Revendications

1. Unité de détection (1) comprenant un capteur de pression (7) conçu pour déterminer une modification de pression d'un fluide,
dans laquelle le capteur de pression (7) comprend un transducteur de pression pouvant être relié au fluide par le biais d'un canal de pression (25) du capteur de pression (7), ainsi que des composants électroniques (17) permettant de faire fonctionner le capteur de pression (7) et permettant de générer un premier signal de sortie, qui sont reliés électriquement au transducteur de pression à cette fin, comprenant en outre
- au moins un panneau, ci-dessous dénommé panneau principal (3), sur lequel sont agencés au moins le capteur de pression (7) et les composants électroniques (17), ainsi que des composants électroniques (20) supplémentaires,
dans laquelle le panneau principal (3) présente un passage (5) fermé d'un côté par le capteur de pression (7),
- un capteur, ci-dessous dénommé capteur de position (15), conçu pour détecter sans contact une modification d'emplacement et de position, par rapport à l'unité de détection (1), d'un composant externe n'appartenant pas à l'unité de détection (1),
- dans laquelle le capteur de position (15) ou au moins une région dudit capteur de position est agencé(e) sur le panneau principal (3) ou sur un panneau supplémentaire, ce dernier étant ci-dessous dénommé panneau secondaire (13),
- dans laquelle le capteur de position (15) est relié électriquement aux composants électroniques (17) qui lui sont associés et aux composants électroniques (20) supplémentaires qui lui sont associés, qui sont conçus pour faire fonctionner le capteur de position (15) et pour générer un signal de sortie du capteur de position (15), ci-dessous dénommé second signal de sortie, et
- des connexions électriques (19) permettant de prélever les premier et second signaux de sortie.

2. Unité de détection (1) selon la revendication 1,
dans laquelle le capteur de position (15) ou au moins une région dudit capteur de position peut être orienté(e) vers le composant externe afin de mettre en oeuvre ladite détection d'une modification d'emplacement et de position.

3. Unité de détection (1) selon la revendication 1,
dans laquelle le capteur de position (15) ou au moins une région dudit capteur de position peut être incliné(e) par rapport au panneau principal (3).

4. Unité de détection (1) selon l'une quelconque des revendications précédentes,
dans laquelle le panneau principal (3) est réalisé sous forme de panneau flexible, de panneau flexible rigide ou de manière à présenter un rétrécissement superficiel (47) séparant ladite section du reste du panneau principal (3) dans la mesure où ladite section est reliée au panneau principal (3) et peut être inclinée par rapport au panneau principal (3).

5. Unité de détection (1) selon l'une quelconque des revendications précédentes,
dans laquelle le capteur de position (15) est un capteur de champ magnétique conçu et agencé de telle manière qu'il détecte des modifications d'un champ magnétique du composant externe à la suite d'un déplacement du composant externe.

6. Système hydraulique ou pneumatique comprenant une chambre à fluide (39), agencée dans un carter, et un composant mobile,
qui est en relation fonctionnelle avec la chambre à fluide (39) de telle manière qu'une modification de pression dans la chambre à fluide (39) peut être provoquée en raison ou à la suite d'un déplacement du composant mobile,
dans lequel le système hydraulique ou pneumatique comprend une unité de détection (1) selon l'une quelconque des revendications précédentes afin de déterminer la modification de pression dans la chambre à fluide (39) et la modification d'emplacement et de position du composant mobile et
dans lequel le composant mobile présente un capteur de position (43) qui est en relation fonctionnelle avec le capteur de position (15).

7. Système hydraulique ou pneumatique selon la revendication 6,
dans lequel le capteur de position (43) est constitué d'un matériau magnétique ou magnétisé et le capteur de position (15) est un capteur de champ magnétique.

8. Utilisation de l'unité de détection selon les revendications 1 à 5 dans un levier de frein hydraulique,
dans laquelle, à la suite de l'actionnement du levier de frein, un signal de sortie du capteur de pression, dénommé premier signal de sortie, est généré au moyen de l'unité de détection en raison de la modification de pression dans le fluide et, de manière redondante, un second signal de sortie est généré par le capteur de position en raison du déplacement associé d'un composant du levier de frein et
dans laquelle au moins le premier signal de sortie est utilisé pour la commande électrique d'un frein.
